(19) Europäisches Patentamt / European Patent Office / Office européen des brevets

(11) **EP 2 461 933 B1**

(12) **EUROPÄISCHE PATENTSCHRIFT**

(45) Veröffentlichungstag und Bekanntmachung des Hinweises auf die Patenterteilung:
**10.07.2013  Patentblatt 2013/28**

(21) Anmeldenummer: **10739920.6**

(22) Anmeldetag: **02.08.2010**

(51) Int Cl.:
**B23H 3/02** (2006.01)   **C25D 21/12** (2006.01)

(86) Internationale Anmeldenummer:
**PCT/EP2010/061220**

(87) Internationale Veröffentlichungsnummer:
**WO 2011/015559 (10.02.2011 Gazette 2011/06)**

(54) **VERFAHREN ZUR ELEKTROCHEMISCHEN BEARBEITUNG EINES WERKSTÜCKES**

METHOD FOR ELECTROCHEMICAL PROCESSING OF A WORKPIECE

PROCÉDÉ POUR L'USINAGE ÉLECTROCHIMIQUE D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.08.2009   DE 102009036221**

(43) Veröffentlichungstag der Anmeldung:
**13.06.2012   Patentblatt 2012/24**

(73) Patentinhaber: **Extrude Hone GmbH**
**42859 Remscheid (DE)**

(72) Erfinder:
• **MATT, Patrick**
**87616 Marktoberdorf (DE)**

• **RIESTER, Michael**
**88451 Dettingen (DE)**
• **SCHREINER, Johannes**
**87700 Memmingen (DE)**

(74) Vertreter: **Prinz & Partner**
**Patentanwälte**
**Rundfunkplatz 2**
**80335 München (DE)**

(56) Entgegenhaltungen:
**WO-A1-02/090030     WO-A1-03/082504**

**Beschreibung**

Die vorliegende Erfindung betrifft ein Verfahren zur elektrochemischen Bearbeitung zumindest eines Werkstückes, bei dem das Werkstück in unterschiedlichen Phasen mit einem Stromfluss behandelt wird, der während der unterschiedlichen Phasen unterschiedliche Stromdichten aufweist. Ein derartiges Verfahren ist aus WO03/082504 bekannt, welches im Zusammenhang die Merkmale des Oberbegriffs des Anspruchs 1 offenbart.

Das elektrochemische Abtragen *("electrochemical machining"* = ECM) ist ein Verfahren zur Entfernung von Metall durch das elektrochemische Herauslösen des Metalls aus der Oberfläche eines anodisch polarisierten, metallenen Werkstückes, welches Bestandteil einer elektrochemischen Zelle ist. Das Verfahren basiert auf dem kontrollierten, anodischen, elektrochemischen Abbau der Oberfläche des zu bearbeitenden, metallischen Werkstückes (Anode) mit einem Werkzeug (Kathode) in der mit einem Elektrolyt gefüllten, elektrochemischen Zelle durch Elektrolyse. Bei der Elektrolyse handelt es sich um einen chemischen Prozess, bei dem ein elektrischer Strom zwischen zwei in einer Lösung, dem Elektrolyten, eingetauchten Elektrode (der positiv geladenen Anode und der negativ geladenen Kathode) fließt.

Typische Beispiele für einen anodischen, elektrochemischen Abbau der Oberfläche eines zu bearbeitenden, metallischen Werkstückes sind das elektrochemische Polieren *("electrochemical polishing"* = ECP), das elektrochemische Entgraten *("electrochemical deburring"* = ECD) und das bereits eingangs erwähnte elektrochemische Abtragen. Beim elektrochemischen Polieren wird die Oberfläche des metallischen Werkstückes entfernt. Die elektrochemische Bearbeitung erfolgt regelmäßig in unterschiedlichen Bearbeitungsphasen, während derer das Werkstück mit unterschiedlichen Stromstärken behandelt wird.

Aus der DE 42 27 005 A1 ist ein Verfahren zum elektrochemischen Bearbeiten eines Werkstückes bekannt, bei dem zwischen mindestens zwei Bearbeitungsperioden ein sprunghafter Stromanstieg erfolgt. Hierbei fließt zwischen einem Werkzeug und einem Werkstück ein Gleichstrom. Dieser kann entweder stetig oder gepulst zugeführt werden. Das in der DE 42 27 005 A1 beschriebene Verfahren wird insbesondere zum Entgraten von Werkstücken angewendet.

Während einer ersten Bearbeitungsperiode wird dort die Stromstärke relativ niedrig gewählt, um eine Überhitzung des Elektrolyten zu verhindern. Hierfür hat sich eine Anfangsstromstärke von 0,5 A pro Millimeter Gesamtkantenlänge des zu bearbeitenden Werkstückes als sicher herausgestellt. Die Bearbeitungsdauer während der ersten Bearbeitungsperiode beträgt 10 % bis etwa 40 % der Gesamtbearbeitungszeit, was regelmäßig 1 bis 3 Sekunden entspricht. Im Anschluss an diese erste Bearbeitungsperiode wird der Arbeitsstrom sprunghaft um den Faktor 1,3 bis 10 erhöht. Dieses sprunghaft erhöhte Stromniveau wird in einer zweiten Bearbeitungsperiode bis zum Ende des Bearbeitungsprozesses beibehalten, wobei während der Bearbeitungsperiode weitere Erhöhungen des Stromniveaus folgen können. Mit dem hier beschriebenen Verfahren soll die Ausbildung von elektrischen Kurzschlüssen reduziert werden.

Bei den aus dem Stand der Technik bekannten Verfahren zum elektrochemischen Bearbeiten ist nun bekannt, dass insbesondere bei der Verwendung von Natriumnitrat als Elektrolyt Ablagerungen auf dem Werkstück entstehen, die zu einer Passivierung der Werkstückoberfläche führen können. Zudem treten beim elektrochemischen Bearbeiten mit zu geringen Stromdichten auf den Werkstückoberflächen Verfärbungen und hohe Oberflächenrauhigkeiten auf. Da jedoch eine hohe Oberflächengüte gewünscht wird, müssen relativ hohe Stromdichten angewendet werden, was wiederum der Bearbeitungsgenauigkeit abträglich ist. Zwar ist es möglich, durch einen gepulsten Gleichstrom die Oberflächengüte zu verbessern, jedoch führt dies zu einer Verlangsamung des Bearbeitungsprozesses, weil zwischen den einzelnen Strompulsen durch eine Stromquelle zunächst entsprechende Stromkapazitäten aufgebaut werden müssen. Zudem sind bei kontinuierlichen Anwendungen von großen Stromstärken entsprechend dimensioniert Stromquellen erforderlich, die bei der Anschaffung und während des Betriebes hohe Kosten verursachen.

Aufgabe der Erfindung ist es daher, die mit Bezug auf den Stand der Technik geschilderten Probleme zumindest teilweise zu lösen und insbesondere ein Verfahren zur elektrochemischen Bearbeitung zumindest eines Werkstückes anzugeben, das eine hohe Bearbeitungsgeschwindigkeit zulässt, kostengünstig in der Anwendung ist und eine hohe Oberflächengüte des Werkstücks erzielt.

Diese Aufgaben werden gelöst mit einem Verfahren gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Das erfindungsgemäße Verfahren zur elektrochemischen Bearbeitung zumindest eines Werkstückes umfasst zumindest die folgenden Schritte:

 a) Einstellen einer ersten Stromdichte während einer ersten Phase in einem Elektrolyt,
 b) Beibehalten der ersten Stromdichte während einer der ersten Phase nachfolgenden zweiten Phase,
 c) Erhöhen der ersten Stromdichte während einer der zweiten Phase nachfolgenden dritten Phase auf eine im Vergleich zur ersten Stromdichte mindestens 30 % höheren zweiten Stromdichte, und

d) Reduzieren der zweiten Stromdichte während einer der dritten Phase nachfolgenden vierten Phase innerhalb von maximal 100 Mikrosekunden (μs) auf maximal 1 % der zweiten Stromdichte.

Mit Verfahrensschritt a) wird insbesondere zum Ausdruck gebracht, dass in der ersten Phase zwischen einem Werkstück und einem Werkzeug im Elektrolyt eine erste Stromdichte eingestellt wird. Unter Stromdichte wird hier das Verhältnis von der Stromstärke in Ampere zum Produkt aus einer freien Kathodenfläche in Quadratmillimeter und dem Verhältnis aus einer Bearbeitungsfläche des Werkstücks und der freien Kathodenfläche verstanden:

$$ \overline{I} = \frac{I}{A_1 \times \dfrac{A_2}{A_1}} $$

mit:

$\overline{I}$ =      gemittelte Stromdichte bezogen auf die freie Kathodenfläche

$I$ =      Strom [A]

$A_1$ =      freie Kathodenfläche [mm$^2$]

$A_2$ =      Bearbeitungsfläche [mm$^2$]

Die freie Kathodenfläche ist die Summe aller Flächen einer Kathode über die bei Anlegung einer elektrischen Spannung ein Stromfluss zwischen dem zu bearbeitenden Werkstück und der Kathode übertritt. Bei der Bearbeitungsfläche des Werkstückes handelt es sich um die Summe aller Flächen des Werksstückes, in denen durch den Stromfluss eine chemische Reaktion erfolgt. Als Elektrolyt können sämtliche Fluide angewendet werden, die beim Anlegen einer Spannung unter dem Einfluss des dabei entstehenden elektrischen Feldes elektrischen Strom leiten, wobei hier bevorzugt Natriumnitrat angewendet wird. Die Einstellung der ersten Stromdichte kann ausgehend von einer beliebigen Startstromdichte erfolgen. Jedoch ist eine Einstellung der ersten Stromdichte, ausgehend von einer Startstromdichte von 0 A/mm$^2$ oder mit einer Startstromdichte, die der Stromdichte entspricht, mit der der letzte Bearbeitungszyklus beendet wurde, bevorzugt. Mit Startstromdichte ist hier diejenige Stromdichte im Elektrolyt gemeint, die vor Beginn des Verfahrensschrittes a) zwischen einem Werkstück und einem Werkzeug herrscht. Die Anpassung der Startstromdichte an die erste Stromdichte kann linear, degressiv oder progressiv erfolgen. Die erste Stromdichte beträgt bevorzugt weniger als 0,8 A/mm$^2$, wodurch gewährleistet wird, dass der apparative Aufwand zur dauerhaften Durchführung dieses Verfahrens vertretbar gering ist und dass eine geringere Oberflächenrauhigkeit als mit aus dem Stand der Technik bekannten Verfahren erzielt wird.

Diese erste Stromdichte wird gemäß Verfahrensschritt b) während einer der ersten Phase nachfolgenden, insbesondere direkt anschließenden zweiten Phase im Wesentlichen konstant gehalten, wobei regelmäßige Schwankungen der Stromdichte in Höhe von +/- 10 %, bevorzugt +/- 5 % und besonders bevorzugt +/- 2 % toleriert werden können. Während dieser zweiten Phase erfolgt regelmäßig der wesentliche Materialabtrag am Werkstück.

Zwischen den Verfahrensschritten b) und c) kann es vorteilhaft sein, den Elektrolytdruck und/oder den Elektrolytfluss im Spalt zu erhöhen. Damit kann eine verbesserte Kühlung des Bearbeitungsraumes erreicht werden. Der Vorlauf vor Schritt c) kann z. B. einige Sekunden betragen, aber auch gleichzeitig mit Schritt c) vorgenommen werden.

Gemäß Verfahrensschritt c) wird die erste Stromdichte während einer der zweiten Phase nachfolgenden, insbesondere direkt anschließenden dritten Phase auf eine im Vergleich zur ersten Stromdichte mindestens 30 %, bevorzugt mindestens 50 %, besonders bevorzugt mindestens 100 % höheren zweiten Stromdichte erhöht. Dabei soll die zweite Stromdichte bevorzugt mindestens 0,8 A/mm$^2$ betragen. Die Erhöhung der Stromdichte erfolgt hierbei bevorzugt sprunghaft, d. h., die Steigung der Stromdichte in Abhängigkeit zur Zeit (t) soll möglichst hoch sein. Diese sprungartige Erhöhung der ersten Stromdichte auf eine im Vergleich zur ersten Stromdichte mindestens 30 % höheren zweiten Stromdichte bewirkt eine Politur der Oberfläche des Werkstükkes. Die dritte Phase endet mit dem Erreichen der zweiten Stromdichte.

Entsprechend Verfahrensschritt d) wird bevorzugt direkt im Anschluss an die dritte Phase die zweite Stromdichte während einer vierten Phase innerhalb von 10 bis 100 Mikrosekunden (us), bevorzugt 30 bis 80 Mikrosekunden (us), besonders bevorzugt (z. B. bei einer zweiten Stromstärke von 0,8 - 1,0 A/mm$^2$) im Wesentlichen 50 bis 60 Mikrosekunden (μs), auf maximal 1 % der zweiten Stromdichte, bevorzugt im Wesentlichen 0 A/mm$^2$, reduziert. Es hat sich herausgestellt, dass sich durch diese schnelle und aktive Reduktion der zweiten Stromdichte auf eine Stromdichte von im Wesentlichen 0 A/mm$^2$ eine außerordentlich hohe Oberflächenqualität auf dem Werkstück einstellt. Insbesondere wird die Passivierung und Verfärbung der Werkstückoberfläche verhindert.

Bei dem hier vorgeschlagenen Verfahren wird zudem als vorteilhaft angesehen, dass die erste Stromdichte während der zweiten Phase zwischen 0,3 A/mm$^2$ bis 0,7 A/mm$^2$, bevorzugt 0,4 A/mm$^2$ bis 0,6 A/mm$^2$, besonders bevorzugt im Wesentlichen 0,5 A/mm$^2$ beträgt. Durch diese Stromdichte werden ein hoher Materialabtrag am Werkstück und damit eine hohe Bearbeitungsgeschwindigkeit erzielt.

Zudem wird als vorteilhaft angesehen, dass die zweite Stromdichte (zumindest am Ende) der dritten Phase mindestens 0,5 $A/mm^2$, bevorzugt mindestens 0,8 $A/mm^2$ beträgt. Ab dieser Stromdichte wird eine besonders hohe Oberflächenqualität durch eine besonders effektive Politur des Werkstückes erzielt.

Bei einer anderen Weiterbildung der Erfindung erfolgt die Reduzierung der zweiten Stromdichte in der vierten Phase durch eine Spannungsumkehrung. Durch eine solche Spannungsumkehrung in Form einer Umpolung des Werkzeuges und der Werkstückes (Kathode und Anode) kann eine besonders schnelle Reduzierung der zweiten Stromdichte auf im Wesentlichen 0 $A/mm^2$ auch dann erzielt werden, wenn die technischen Eigenschaften einer verwendeten Stromquelle eine solch starke Reduzierung der zweiten Stromdichte innerhalb der erforderlichen Zeit unter regelmäßigen Bedingungen nicht zulassen. Zur Realisierung kann hierbei insbesondere ein zweiter Stromkreis mit negativem Potential hinzugeschaltet werden. Dieser weist bevorzugt einen Generator mit einer Dauerleistung von (mindestens) 400 Ampere und einer Kurzzeitleistung von (mindestens) 1000 Ampere für (mindestens) eine Sekunde auf. Mit diesem zweiten Stromkreis werden während der vierten Phase bevorzugt maximal zehn Pulse erzeugt.

In einer weiteren bevorzugten Ausführungsform der Erfindung ist die zweite Stromdichte während Verfahrensschritt c) im Wesentlichen teilweise konstant. Gleichwohl kann die Stromdichte auch zwischen dem Verfahrensschritt c) und dem Verfahrensschritt d) eine Zeitspanne lang im Wesentlichen konstant gehalten werden. Die Länge der Zeitspanne hat Einfluss auf die erzielbare Oberflächengüte, wie Rauhigkeit, Färbung und Glanz, und kann den Erfordernissen angepasst werden.

In Weiterbildung der Erfindung wird vorgesehen, dass die Bearbeitungsdauer während der zweiten Phase größer ist, als die Summe der Bearbeitungsdauern während der übrigen Phasen.

Die einzelnen Phasen können insbesondere folgende Längen aufweisen:

- erste Phase: 100 $\mu$s bis 500 $\mu$s,
- zweite Phase: 10 Millisekunden bis 100 Sekunden,
- dritte Phase: maximal 1 Sekunde konstant oder in Summe maximal 1 Sekunde gepulst; und
- vierte Phase: maximal 70 $\mu$s.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, diese jedoch nicht darauf beschränkt ist. Es zeigen schematisch:

Fig. 1: den Verlauf der Stromdichte während eines Bearbeitungszyklus, und

Fig. 2: eine Veranschaulichung der Bedingungen bei der Durchführung eines Verfahrens zur elektrochemischen Bearbeitung zumindest eines Werkstückes.

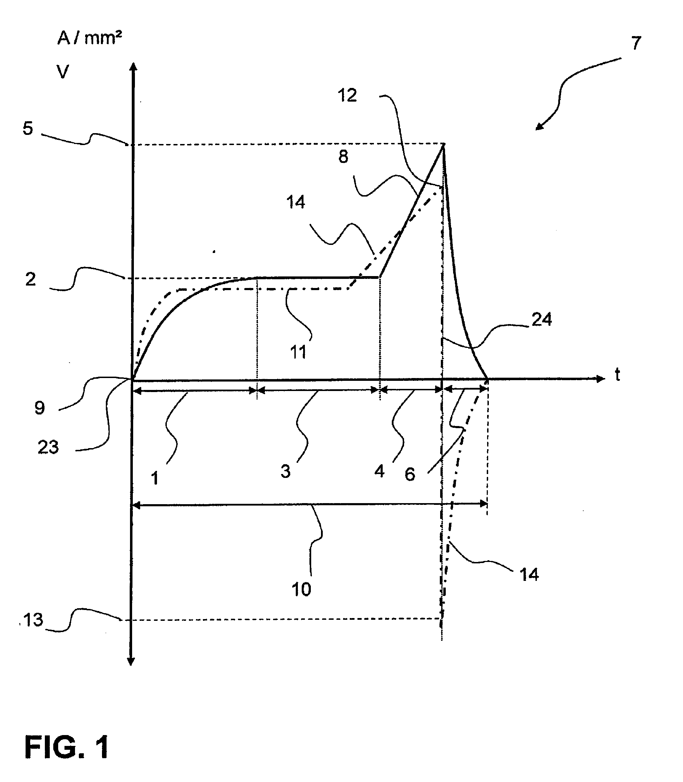

Aus Fig. 1 geht ein Diagramm 7 hervor, das den Stromdichteverlauf 8 (durchgezogene Linie) und den Spannungsverlauf 14 (Strich-Punkt-Linie) in Abhängigkeit der Bearbeitungszeit t zeigt. Hierbei kennzeichnet die Ordinate des Diagramms 7 die Stromdichte in $A/mm^2$ [Ampere pro Quadratmillimeter] bzw. die Spannung in V [Volt] und die Abszisse des Diagramms 7 die Bearbeitungszeit t. Das Diagramm 7 zeigt eine erste Phase 1 während der der Stromdichteverlauf 8 von einer Startstromdichte 9 (hier: im Wesentlichen 0 $A/mm^2$) (degressiv) auf eine erste Stromdichte 2 am Ende der ersten Phase 1 ansteigt und der Spannungsverlauf 14 von einer Startspannung 23 (hier: im Wesentlichen 0 Volt) (degressiv) auf eine erste Spannung 11 am Ende der ersten Phase 1 ansteigt. Der Ursprung des Diagramms 7 repräsentiert hier die Startstromdichte 9 in Höhe von 0 $A/mm^2$ und die Startspannung 23 in Höhe von 0 Volt zum Beginn des Bearbeitungszyklus 10. Nachdem die erste Stromdichte 2 am Ende der ersten Phase 1 und die erste Spannung 11 am oder bereits vor dem Ende der ersten Phase 1 erreicht ist, beginnt die zweite Phase 3. In dieser zweiten Phase 3 wird die erste Stromdichte 2 beibehalten, so dass der Stromdichteverlauf 8 innerhalb der zweiten Phase 3 weder steigt noch fällt. Auch die erste Spannung 11 wird in dieser zweiten Phase 3 bis zum Ende der zweiten Phase 3 oder kurz vor Ende der zweiten Phase 3 beibehalten, so dass der Spannungsverlauf 14 innerhalb der zweiten Phase 3 bzw. bis kurz vor Ende der zweiten Phase 3 weder steigt noch fällt. An die zweite Phase 3 schließt sich die dritte Phase 4 an, während der die erste Stromdichte 2 auf eine im Vergleich zur ersten Stromdichte 2 mindestens 30 % höhere zweite Stromdichte 5 sprunghaft erhöht wird. Auch die erste Spannung 11 wird in dieser dritten Phase 4 auf eine zweite Spannung 12 erhöht. An die dritte Phase 4 schließt sich die vierte Phase 6 an, während der die zweite Stromdichte 5 innerhalb vom maximal 100 $\mu$s auf 0 $A/mm^2$ reduziert wird. Zu Beginn der vierten Phase 6 (bzw. am Ende der dritten Phase 4) erfolgt eine Spannungsumkehrung 24 auf eine dritte Spannung 13, wobei die dritte Spannung 13 während der vierten Phase 6 innerhalb vom maximal 100 $\mu$s auf 0 Volt reduziert wird.

Demzufolge lässt sich das erfindungsgemäße Verfahren auch anhand des entsprechenden Spannungsverlaufs, wie er hier beispielhaft für das bevorzugte Ausführungsbeispiel angegeben ist, identifizieren bzw. (maschinell) regeln.

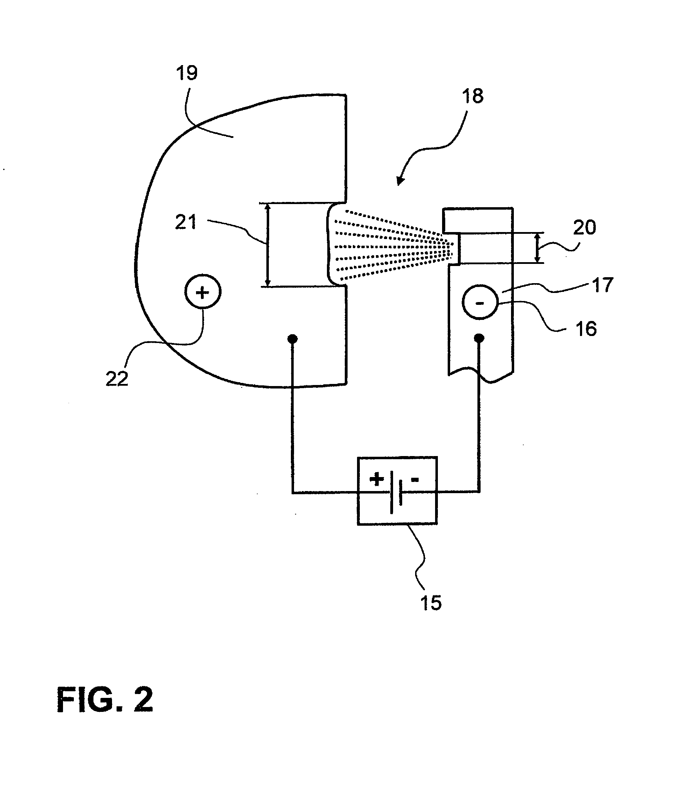

Die Fig. 2 zeigt ein Ausführungsbeispiel einer Vorrichtung zum Durchführen eines Verfahrens zur elektrochemischen Bearbeitung zumindest eines Werkstücks 19 und dient insbesondere zur Veranschaulichung der Situation im Spalt. Hierzu ist eine Stromquelle 15 elektrisch leitend mit dem Werkstück 19 (Anode 22) und einem Werkzeug 17 (Kathode 16) verbunden. Zwischen diesem Werkstück 19 und dem Werkzeug 17 ist ein Spalt 18 ausgebildet, der den Abstand zwischen Werkstück 19 und Werkzeug 17 definiert. In diesem Spalt 18 ist ein hier nicht dargestellter Elektrolyt angeordnet. Das Werkzeug 17 weist eine freie Kathodenfläche 20 auf, über die bei Anlegung einer Spannung durch die Stromquelle 15 ein Stromfluss (hier gestrichelt dargestellt) auf das Werkstück 19 übertritt. Hierbei erfolgt in einem Bereich einer Bearbeitungsfläche 21 des Werkstückes 19 ein Herauslösen von Metall.

Das erfindungsgemäße Verfahren zur elektrochemischen Bearbeitung zeichnet sich durch eine hohe Bearbeitungsgeschwindigkeit in Verbindung mit einer hohen Oberflächengüte des bearbeiteten Werkstückes aus und ist zugleich kostengünstig in der Anwendung.

Bezugszeichenliste

| | |
|---|---|
| 1 | erste Phase |
| 2 | erste Stromdichte |
| 3 | zweite Phase |
| 4 | dritte Phase |
| 5 | zweite Stromdichte |
| 6 | vierte Phase |
| 7 | Diagramm |
| 8 | Stromdichteverlauf |
| 9 | Startstromdichte |
| 10 | Bearbeitungszyklus |
| 11 | erste Spannung |
| 12 | zweite Spannung |
| 13 | dritte Spannung |
| 14 | Spannungsverlauf |
| 15 | Stromquelle |
| 16 | Kathode |
| 17 | Werkzeug |
| 18 | Spalt |
| 19 | Werkstück |
| 20 | freie Kathodenfläche |
| 21 | Bearbeitungsfläche |
| 22 | Anode |
| 23 | Startspannung |
| 24 | Spannungsumkehrung |
| | |
| t | Zeit |
| A | Ampere |
| V | Volt |
| $mm^2$ | Quadratmillimeter |

**Patentansprüche**

1. Verfahren zur elektrochemischen Bearbeitung zumindest eines Werkstückes, umfassend zumindest die folgenden Schritte:

a) Einstellen einer ersten Stromdichte (2) während einer ersten Phase (1) in einem Elektrolyt,

b) Beibehalten der ersten Stromdichte (2) während einer der ersten Phase (1) nachfolgenden zweiten Phase (3),
**gekennzeichnet durch**,
c) Erhöhen der ersten Stromdichte (2) während einer der zweiten Phase (3) nachfolgenden dritten Phase (4) auf eine im Vergleich zur ersten Stromdichte (2) mindestens 30 % höheren zweiten Stromdichte (5), und
d) Reduzieren der zweiten Stromdichte (5) während einer der dritten Phase (4) nachfolgenden vierten Phase (6) innerhalb von maximal 100 Mikrosekunden ($\mu$s) auf maximal 1 % der zweiten Stromdichte.

2. Verfahren nach Patentanspruch 1, wobei zwischen den Schritten b) und c) zumindest ein Elektrolytdruck oder ein Elektrolytfluss erhöht wird.

3. Verfahren nach Patentanspruch 1 oder 2, wobei die erste Stromdichte (2) während der zweiten Phase (3) zwischen 0,3 A/mm$^2$ bis 0,7 A/mm$^2$ beträgt.

4. Verfahren nach einem der vorhergehenden Patentansprüche, wobei die zweite Stromdichte (5) in der dritten Phase (4) mindestens 0,5 A/mm$^2$ beträgt.

5. Verfahren nach einem der vorhergehenden Patentansprüche, wobei die Reduzierung der zweiten Stromdichte (5) in der vierten Phase (6) durch eine Spannungsumkehrung erfolgt.

6. Verfahren nach einem der vorhergehenden Patentansprüche, wobei die zweite Stromdichte (5) während Verfahrensschritt c) teilweise konstant ist.

7. Verfahren nach einem der vorhergehenden Patentansprüche, wobei die Bearbeitungsdauer während der zweiten Phase (3) größer ist als die Summe der Bearbeitungsdauern während der übrigen Phasen (1, 4,6).

**Claims**

1. Method for the electrochemical machining of at least one workpiece, comprising at least the following steps:

a) setting a first current density (2) during a first phase (1) in an electrolyte,
b) retaining the first current density (2) during a second phase (3), following the first phase (1),
**characterized by**
c) increasing the first current density (2) during a third phase (4), following the second phase (3), to a second current density (5) that is at least 30% higher in comparison with the first current density (2), and

d) reducing the second current density (5) during a fourth phase (6), following the third phase (4), to a maximum of 1% of the second current density within a maximum of 100 microseconds ($\mu$s).

2. Method according to Patent Claim 1, at least an electrolyte pressure or an electrolyte flow being increased between steps b) and c).

3. Method according to Patent Claim 1 or 2, the first current density (2) during the second phase (3) being between 0.3 A/mm$^2$ and 0.7 A/mm$^2$.

4. Method according to one of the preceding patent claims, the second current density (5) in the third phase (4) being at least 0.5 A/mm$^2$.

5. Method according to one of the preceding patent claims, the reduction of the second current density (5) in the fourth phase (6) being performed by a voltage reversal.

6. Method according to one of the preceding patent claims, the second current density (5) being partially constant during method step c).

7. Method according to one of the preceding patent claims, the machining time during the second phase (3) being greater than the sum of the machining times during the other phases (1, 4, 6).

## Revendications

1. Procédé de traitement électrochimique d'au moins une pièce, comprenant au moins les étapes suivantes :

   a) réglage d'une première densité de courant (2) pendant une première phase (1) dans un électrolyte,
   b) maintien de la première densité de courant (2) pendant une deuxième phase (3) qui suit la première phase (1),
   **caractérisé par**
   c) augmentation de la première densité de courant (2) pendant une troisième phase (4) qui suit la deuxième phase (3) à une deuxième densité de courant (5) au moins 30 % plus élevée en comparaison de la première densité de courant (2), et
   d) réduction de la deuxième densité de courant (5) pendant une quatrième phase (6) qui suit la troisième phase (4) dans un délai maximum de 100 microsecondes ($\mu$s) au maximum à 1 % de la deuxième densité de courant.

2. Procédé selon la revendication 1, selon lequel au moins une pression d'électrolyte ou un débit d'électrolyte est augmenté entre les étapes b) et c).

3. Procédé selon la revendication 1 ou 2, selon lequel la première densité de courant (2) pendant la deuxième phase (3) est comprise entre 0,3 A/mm$^2$ et 0,7 A/mm$^2$.

4. Procédé selon l'une des revendications précédentes, selon lequel la deuxième densité de courant (5) dans la troisième phase (4) est au moins égale à 0,5 A/mm$^2$.

5. Procédé selon l'une des revendications précédentes, selon lequel la réduction de la deuxième densité de courant (5) dans la quatrième phase (6) s'effectue par une inversion de la tension.

6. Procédé selon l'une des revendications précédentes, selon lequel la deuxième densité de courant (5) est partiellement constante pendant l'étape c) du procédé.

7. Procédé selon l'une des revendications précédentes, selon lequel la durée du traitement pendant la deuxième phase (3) est supérieure à la somme des durées du traitement pendant les autres phases (1, 4, 6).

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03082504 A
- DE 4227005 A1